Europäisches Patentamt

European Patent Office

Office européen des brevets

(19)

(11) Veröffentlichungsnummer: **0 115 558**
**A1**

(12) **EUROPÄISCHE PATENTANMELDUNG**

(21) Anmeldenummer: 83101253.9

(22) Anmeldetag: 10.02.83

(51) Int. Cl.³: **G 06 K 7/10, B 65 G 47/49**

(43) Veröffentlichungstag der Anmeldung: 15.08.84
Patentblatt 84/33

(71) Anmelder: **Gebhardt Fördertechnik GmbH, Postfach 304, D-6920 Sinsheim (DE)** .

(72) Erfinder: **Felder, Hans Christian, Dipl.-Ing., Forsthausstrasse 12, D-6022 Dreieichenhain (DE)**

(84) Benannte Vertragsstaaten: **AT BE CH DE FR GB IT LI NL SE**

(74) Vertreter: **Neugebauer, Bernhard, Tölzer Strasse 7, D-7100 Heilbronn (DE)**

(54) **Verteileranlage für bewegtes Stückgut.**

(57) Verteileranlage für auf einer Förderbahn bewegte Stückgüter, die von einer gemeinsamen Zuführbahn auf mehrere Stationen (10) einer Verteilerbahn (9) aufgeteilt werden. Jedes Stückgut (20') ist dazu mit einer eine Information enthaltenden Kodierung (36) versehen, die im Bereich eines Objektfeldes einer vorgeschalteten Abtaststation mittels einer an eine elektrische Auswertschaltung angeschlossenen Video-Kamera abgetastet wird, um eine Ausgangsinformation zu ermitteln.

Die Video-Kamera ist senkrecht über der Abtaststation angeordnet. Jedes Stückgut wird in Querrichtung innerhalb des Objektfeldes unausgerichtet und um die vertikale Achse winkelunabhängig mit obenliegender Kodierung durch das Objektfeld bewegt. Die Kodierung besteht aus einer einzigen Balkengruppe od. dgl., deren Abtastung nach Lage und Inhalt durch Positionsbalken präzisiert und somit auf kurze Zeit reduziert wird.

Verteileranlage für bewegte Stückgüter

Die Erfindung betrifft eine Verteileranlage für auf einer Förderbahn bewegte Stückgüter, die von einer gemeinsamen Zuführbahn auf mehrere Stationen einer Verteilerbahn verteilt werden, wozu jedes Stückgut mit einer eine Information enthaltenden Kodierung versehen ist, die im Bereich eines Objektfeldes einer der Verteilerbahn vorgeschalteten Abtaststation mittels einer an eine elektrische Auswertschaltung angeschlossenen Video-Kamera berührungslos abgetastet wird, um die der zugehörigen Station der Verteilerbahn gehörige Ausgangsinformation zu ermitteln.

Aus der DE-AS 17 74 490 ist bereits eine Vorrichtung zum optischen Abtasten von Informationen auf geförderten Gegenständen bekannt, bei der die Gegenstände unausgerichtet an einer Video-Kamera vorbeigeführt werden. Dabei wird die im Objektfeld der Video-Kamera befindliche Kodierung abgelesen und mit Hilfe einer Auswertschaltung in eine Ausgangsinformation umgewandelt. Die Kodierung besteht dabei aus einer Gruppe von parallelen Balken, die in einem zwischen $90^O$ und $45^O$ zur Balkenrichtung liegenden Winkel abgetastet werden kann. Um auch eine Abtastung zwischen $0^O$ und $45^O$ zu erreichen, muß die Kodierung aus zwei gleichen Gruppen von parallelen Balken gebildet werden, wobei die Balken der einen Gruppe einen Winkel von $90^O$ zu den Balken der anderen Gruppe einschließen. Die Gegenstände müssen daher entweder innerhalb des Winkelbereichs von $90^O$ bis $45^O$ grob ausgerichtet an der Video-Kamera vorbeigeführt werden oder mit einer Doppelkodierung versehen werden. Ersteres bedingt Korrekturmittel für die Querführung und setzt eine winkelgerechte Anlieferung voraus. Letzteres benötigt dagegen eine Doppelkodierung, die sowohl für die Herstellung als auch Auswertung einen größeren Zeitaufwand erfordert, wodurch die Abtastleistung zwangsläufig reduziert wird.

Aufgabe der Erfindung ist daher eine verbesserte Verteileranlage, bei der eine einfache Kodierung völlig unabhängig
von der Winkellage abgetastet und dadurch eine hohe Abtastleistung erzielt werden kann.

Diese Aufgabe wird durch die Erfindung dadurch gelöst, daß
die Video-Kamera senkrecht von oben auf die Transportebene
der Abtaststation gerichtet ist, daß jedes Stückgut sowohl
in Querrichtung innerhalb des Objektfeldes unausgerichtet
als auch um die vertikale Achse winkelunabhängig mit oben
liegender Kodierung durch das Objektfeld der Video-Kamera
transportiert wird und daß die Kodierung aus einer einzigen
die Information enthaltenden Balkengruppe besteht, der mindestens ein Positionsbalken zugeordnet ist, aus dessen Abtastung die Winkellage der Kodierung ermittelbar und danach
die Kodierung auswertbar ist, um die Ausgangsinformation
zur Weitergabe an die zugeordnete Station der Verteilerbahn
zu ermitteln.

Die mit der Erfindung erreichten Vorteile bestehen insbesondere darin, daß durch die besondere Ausbildung der Kodierung
deren Ort und Lage eindeutig, schnell und einfach, und zwar
unabhängig von der Winkellage senkrecht zur Transportebene
ermittelt werden kann. Die Kodierung kann daher in einfacher
Weise mit einer einzigen Balken- oder Zeilengruppe ausgestattet sein, die für die Informationsfindung abzutasten ist. Sowohl für die Herstellung der Kodierung als auch deren Abtastung
werden somit nur kurze Zeiten benötigt. Die zu sortierenden
Stückgüter können daher in dichter Reihenfolge durch das Objektfeld der Video-Kamera geführt werden, so daß eine hohe
Stundenleistung erreicht wird. Die Verteileranlage nach der
Erfindung eignet sich daher besonders für die Anwendung bei
Anlagen zum Zusammenstellen von Sendungen o. dgl. für verschiedene Ziele mit in der Raumform unterschiedlichen Stückgütern.

Weitere Merkmale der Erfindung sind in den Unteransprüchen beschrieben.

Ausführungsbeispiele der Erfindung sind in der Zeichnung dargestellt und werden im folgenden näher erläutert. Es zeigen:

Fig. 1 die Draufsicht auf die Verteileranlage für Stückgüter;

Fig. 2 eine Schnittansicht durch die Aufgabestation;

Fig. 3 die schematische Darstellung der Abtastation mit Auswertschaltung;

Fig. 4 eine Ausführung der Kodierung;

Fig. 5 eine andere Ausführung der Kodierung;

Fig. 6 das Objektfeld der Video-Kamera.

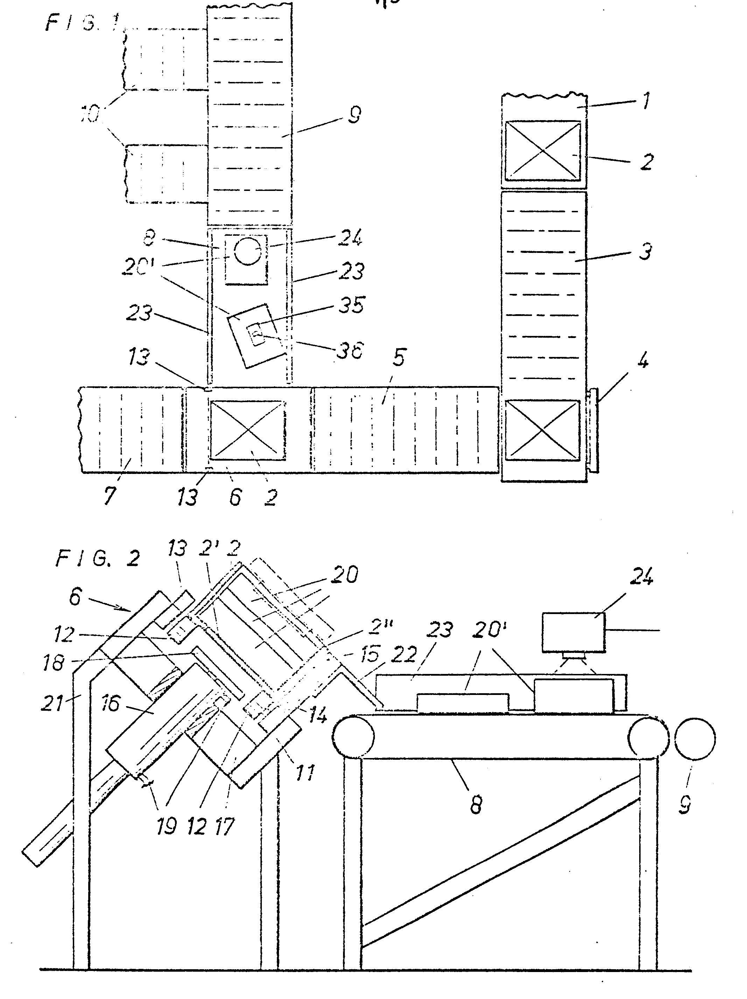

Die Verteileranlage für Päckchen, Gebinde oder ähnliche Stückgüter besteht gem. Fig. 1 aus einer Zuführtransportbahn 1, auf der z.B. in Behältern 2 übereinander gelegte Stückgüter herangeführt werden. Die Stückgüter selbst können in Größe und Form unterschiedlich sein und sind oben mit einem eine Kodierung aufweisenden Etikett 35 versehen. Letzteres ist beispielsweise durch einen Matrixdrucker mit einer Kodierung und einem Klartext bedruckt und dann auf dem Stückgut angebracht, insbesondere aufgeklebt worden. An die an sich beliebig ausgebildete Zuführtransportbahn 1 schließt sich ein Stauförderer 3 an, dessen Ende als Querförderer 4 ausgebildet ist. Dieser mündet in eine Rollenbahn 5 mit angetriebenen Rollen, der sich eine Entleervorrichtung 6 anschließt. In Transportrichtung der Rollenbahn 5 ist an die Entleervorrichtung 6 ein Leergutförderer 7 angeschlossen, während in Entleerrichtung an der Entleervorrichtung 6 ein Gurtförderer 8 vorgesehen ist, dem sich eine Verteilerbahn 9 mit mehreren seitlich abzweigenden Stationen 10 anschließt, in die durch nicht dargestellte Abweiser o. dgl. die zugeordneten Stückgüter abgelenkt werden. Natürlich kann die Verteileranlage auch in anderer, den örtlichen Gegebenheiten und/oder der Art des Stückgutes angepaßter Weise ausgeführt sein.

So geht z.B. gem. Fig. 2 zum Entleeren der Behälter 2 die in üblicher Weise waagerecht angeordnete Rollenbahn 5 stetig in eine zur Entleerrichtung zum Gurtförderer 8 geneigte Lage über, die in gleicher Schräglage an die Entleervorrichtung 6 anschließt. Diese weist einen etwa um 45° geneigten Rahmen 11 auf, in dem zum Behältertransport eine aus Rollen bestehende Transportbahn 12 gelagert ist, die in nicht dargestellter Weise angetrieben wird. Sobald der Behälter 2 den Entleerort erreicht hat, wird durch Unterbrechen einer Lichtschranke 13 oder einer entsprechenden Positionier-Einrichtung der Antrieb ausgeschaltet. Das Abrutschen des Behälters 2 in Neigungsrichtung verhindern in der Seitenwandebene angebrachte Rollen 14, die in einer auf dem Rahmen 11 aufgesetzten Halterung 15 drehbar gelagert sind. Mittig unterhalb des am Entleerort stehenden Behälters 2 ist ein hilfskraftbetätigter Stellzylinder 16 an einem am Rahmen 11 befestigten Steg 17 vorgesehen, dessen Kolbenstange einen Stempel 18 trägt. Das Druckmittel wird durch Leitungen 19 zu- und abgeleitet, so daß der Stempel 18 nach oben oder unten bewegt werden kann. Der Boden des über dem Stempel 18 befindlichen Behälters 2 weist einen Durchbruch 2' auf, durch den der Stempel 18 in den Behälter 2 eindringen und das darin gelagerte Stückgut 20 anheben kann. Der Rahmen 11 der Entleervorrichtung 6 ruht auf einem Gestell 21, so daß eine etwas unterhalb des oberen Randes 2'' des Behälters 2 an der Halterung 15 befestigte Rutsche 22 in der Entleerstellung dicht über dem Gurtförderer 8 endet. Auf letzterem sorgen seitlich angebrachte Leitplanken 23 dafür, daß die entladenen Stückgüter 20' durch das Objektfeld einer oberhalb des Gurtförderers 8 und senkrecht zu dessen Transportebene angebrachten Video-Kamera 24 transportiert werden. Es ist ersichtlich, daß das Entladen der Stückgüter 20 hintereinander erfolgt, so daß sie auch in Kolonne hintereinander unter der Video-Kamera 24 hindurchwandern.

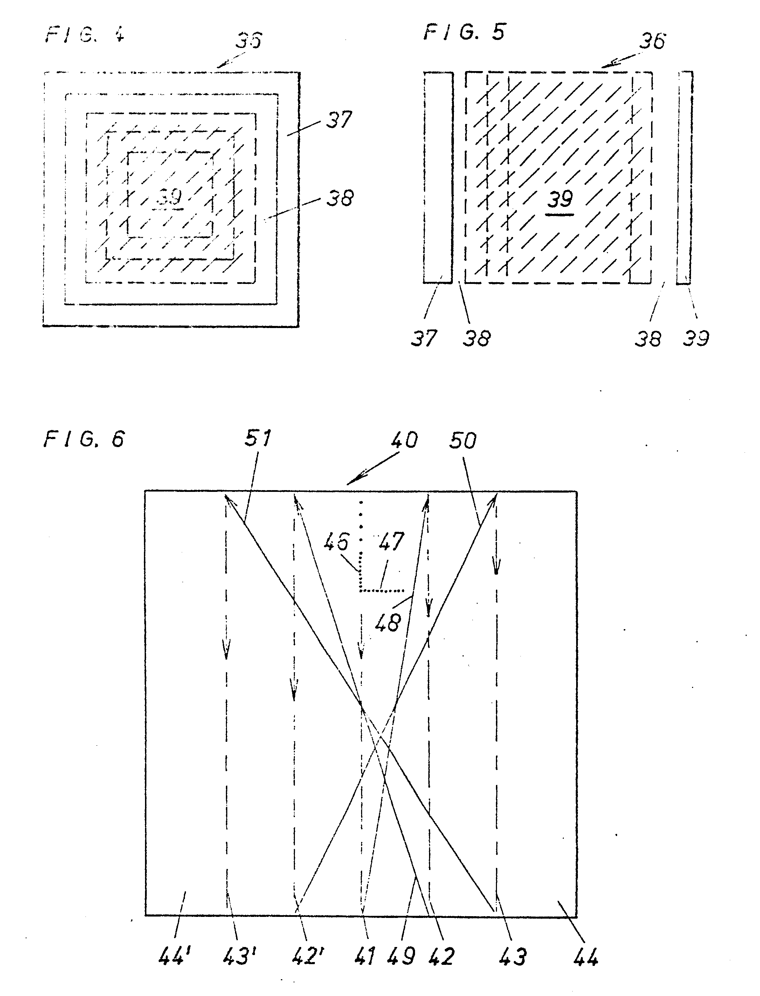

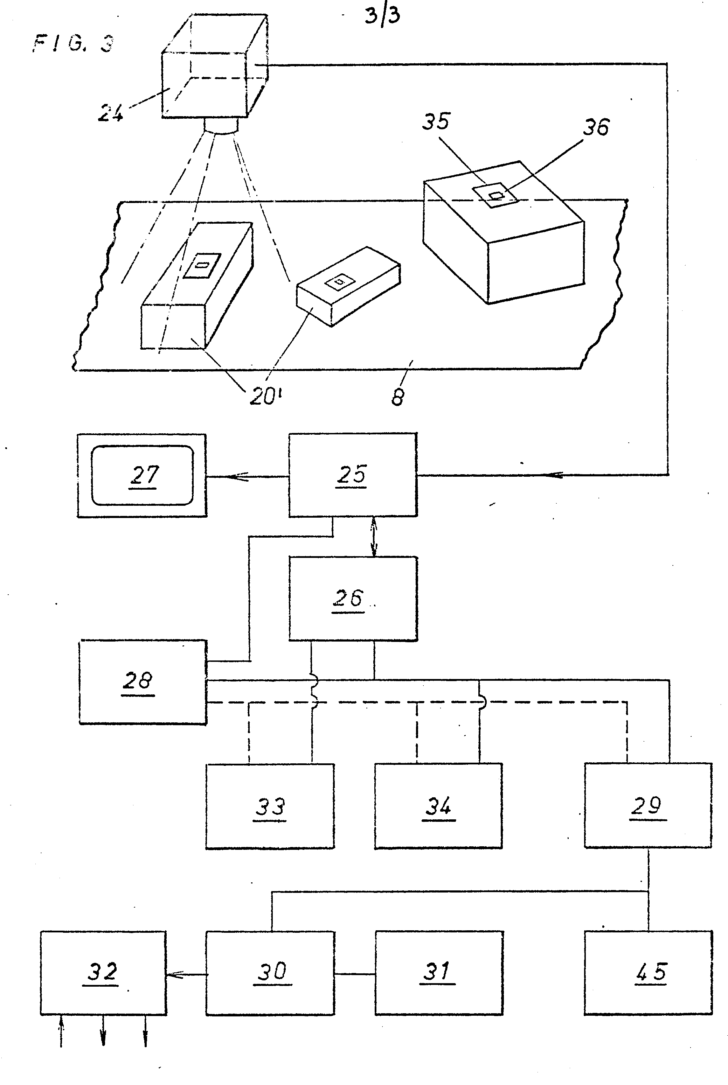

Die Video-Kamera 24 ist gem. Fig. 4 mit einem Objektiv großer Tiefenschärfe ausgestattet, um Höhenunterschiede zwischen verschiedenen Stückgütern 20' von z.B. 40 cm auszugleichen. Auch Schrägaufnahmen bis zu etwa 20° ergeben noch sichere Auswertergebnisse. Selbstverständlich ist das unterhalb der Video-Kamera 24 liegende Objektfeld gleichmäßig und gut ausgeleuchtet, um klare Bilder, insbesondere auch bei Schräglage und/oder unter Klarsichtfolie zu erhalten. Die Video-Kamera 24 ist über eine Ein/Ausgabe-Schaltung 25 mit einem Speicher 26 verbunden. Die in diesen überragenen Bildinformationen können mit Hilfe eines Monitors 27 überwacht werden.

Die Zielsteuerung besteht aus der von der Ein/Ausgabe-Schaltung 25 gespeisten Steuerung 28, die wiederum über eine Anpassungsschaltung 29 einen integrierten µ-Prozessor 30 und einen Schreib/Lesespeicher 45 versorgt. Letzterer steht mit einem Terminal 31 und einer Ausgangsschaltung 32 in Verbindung, die auch gleichzeitig zur Aufnahme des Startimpulses dient. Zwischen Steuerung 28 und Anpassungsschaltung 29 sind ferner noch Schaltkreise für die X-Ablesung 33 und die Y-Ablesung 34 vorgesehen.

Jedes Stückgut 20 bzw. 20' trägt ein mit einer Kodierung 36 versehenes Etikett 35, das zum Transport oben liegt, so daß es im Objektfeld von der Video-Kamera 24 erfaßt werden kann. Die auf diesem Etikett 35 aufgedruckte Kodierung 36 weist gem. Fig. 4 und 5 eine quadratische oder rechteckige Kodierfläche auf, an deren Rand Positionsbalken 37 vorgesehen sind, die durch einen Spalt 38 von einer die Information enthaltenden Balkengruppe 39 getrennt sind. Letztere besteht in bekannter Weise aus einer mehr oder weniger großen Anzahl von parallelen bzw. konzentrischen Balken, die mit oder ohne Abstand nebeneinander angeordnet sind. Die Balkengruppe 39 kann als geschlossenes Viereck gem. Fig. 4 oder auch als parallele Balkengruppe gem. Fig. 5 ausgebildet sein. Auch eine kreisförmige Ausbildung ist denkbar. An einem Rand oder auch an gegenüberliegenden Rändern dieser Balkengruppe 39 ist jeweils ein Positionsbalken 37 angeordnet, so daß die Außenumrandung der Kodierung immer ein Viereck bildet. Der Positionsbalken 37 besitzt eine Breite von mindestens drei bis maximal zehn Bildpunkten.

Das von der Video-Kamera 24 abzutastende Objektfeld 40 ist gem. Fig. 6 parallel zur Transportrichtung, also in Y-Richtung, des Stückgutes 20' optisch durch parallele Suchlinien in Suchspalten eingeteilt, wobei symmetrisch beiderseits einer mittleren Suchlinie 41, z.B. im Abstand von 80 Bildpunkten, Suchlinien 42 und 42' und weiter außen im gleichen Abstand weitere Suchlinien 43 und 43' vorgesehen sind. Beiderseits außen ist jeweils ein nicht abzusuchender Rand 44 und 44', z.B. von der Breite von 96 Bildpunkten, angelegt. Der Suchvorgang beginnt am vorderen Ende des Objektfeldes 40 an der mittleren Suchlinie 41 mit auf Sprungschaltung geschalteter Bildpunkfolge 46, so daß z.B. nur jeder dritte Bildpunkt erfaßt wird. Dunkel-Hell-Übergänge werden dabei nicht registriert. Erfolgt dagegen ein Hell-Dunkel-Übergang wird sofort auf unmittelbare Bildpunktfolge, also auf Erfassung eines jeden Bildpunktes umgeschaltet, und zwar bis zu maximal zehn Bildpunkten hintereinander. Wird bis dahin kein Dunkel-Hell-Übergang festgestellt, dann wird die Suche rechtwinklig nach rechts, als in X-Richtung, gleichfalls bis zu zehn Bildpunkte 47 hintereinander fortgesetzt. Erfolgt auch dann kein Dunkel-Hell-Übergang, wird auf die mittlere Suchlinie 41 zurückgesprungen und die Suche in beschriebener Weise sprungweise fortgesetzt. Nach Erreichen des Endes der mittleren Suchlinie 41 wird gem. Pfeil 48 die Suche am vorderen Ende der rechten Suchlinie 42 weitergeführt, um von dieser auf die benachbarte linke Suchlinie 42' gem. Pfeil 49, dann auf die äußere rechte Suchlinie 43 gem. Pfeil 50 und schließlich auf die linke äußere Suchlinie 43' gem. Pfeil 51 umzuspringen.

Wird also nach Umschalten des Suchvorganges auf jeden Bildpunkt ein Dunkel-Hell-Übergang festgestellt, dann ist die Kodierung 36 lokalisiert. Zur Lagebestimmung wird danach der in Transportrichtung vorderste Eckpunkt der Kodierung 36 und anschließend der hinterste Eckpunkt ermittelt und sodann durch beide Eckpunkte eine Linie gelegt, in deren Mitte zwangsläufig der Mittelpunkt der Kodierung 36 liegt. Zur Auswertung
der Balkengruppe 39 wird dann eine parallel zu den Suchlinien
41 bis 43 gelegte Schnittlinie durch den Mittelpunkt der Kodierung 36 gelegt, die den Abtastmaßstab des geschnittenen
Koderasters enthält.

Es ist ersichtlich, daß durch die oben beschriebenen Vorgänge
zum Suchen und Lagebestimmen der Kodierung 36 die Stückgüter
20' ungeordnet, insbesondere mit um die senkrechte Achse völlig unabhängiger Winkellage, also praktisch chaotisch durch
das Objektfeld 40 der Video-Kamera 24 transport werden können,
wobei eine sichere Informationsermittlung erfolgt. Aus dieser
wird dann durch Rechner oder Speicher die zugeordnete Station
10 der Verteilerbahn 9 ermittelt und das Stückgut 20' in diese
Station 10 ausgeschleust.

Natürlich kann anstelle der gesondert aufgedruckten Balkengruppe 39 auf dem Etikett 35 auch unmittelbar die Klarschrift
als Informationsträger verwendet werden. Da die Schrift auf
Grund der zeilenförmigen Aufteilung eine Gruppe von Balken
darstellt, kann diese in oben beschriebener Weise gelesen und
durch Bildvergleich der vorbestimmten Station 10 zugeordnet
werden.

P a t e n t a n s p r ü c h e

1. Verteileranlage für auf einer Förderbahn bewegte Stückgüter, die von einer gemeinsamen Zuführbahn auf mehrere Stationen einer Verteilerbahn verteilt werden, wozu jedes Stückgut mit einer eine Information enthaltenden Kodierung versehen ist, die im Bereich eines Objektfeldes einer der Verteilerbahn vorgeschalteten Abtaststation mittels einer an eine elektrische Auswertschaltung angeschlossenen Video-Kamera berührungslos abgetastet wird, um die der zugehörigen Station der Verteilerbahn gehörige Ausgangsinformation zu ermitteln, dadurch gekennzeichnet, daß die Video-Kamera (24) senkrecht von oben auf die Transportebene der Abtaststation gerichtet ist, daß jedes Stückgut (20') sowohl in Querrichtung innerhalb des Objektfeldes (40) unausgerichtet als auch um die vertikale Achse winkelunabhängig mit oben liegender Kodierung (36) durch das Objektfeld (40) der Video-Kamera (24) transportiert wird und daß die Kodierung (36) aus einer einzigen, die Information enthaltenden Balkengruppe (39) besteht, der mindestens ein Positionsbalken (37) zugeordnet ist, aus dessen Abtastung die Winkellage der Kodierung (36) ermittelbar und danach die Kodierung (36) auswertbar ist, um die Ausgangsinformation zur Weitergabe an die zugeordnete Station (10) der Verteilerbahn (9) zu ermitteln.

0115558

2. Verteileranlage nach Anspruch 1, dadurch gekennzeichnet, daß die Kodierung (36) auf einer rechteckigen oder quadratischen Fläche angeordnet ist, innerhalb der die die Information enthaltende Balkengruppe (39) und der oder die Positionsbalken (37) angeordnet sind, wobei die Balkengruppe (39) und der oder die Positionsbalken (37) durch einen Spalt (38) voneinander getrennt sind.

3. Verteileranlage nach Anspruch 1 oder 2, dadurch gekennzeichnet, daß an einem Rand, vorzugsweise an gegenüberliegenden Rändern der Kodierung (36) je ein Positionsbalken (37) vorgesehen ist.

4. Verteileranlage nach einem der Ansprüche 1 bis 3, dadurch gekennzeichnet, daß das von der Video-Kamera (24) erfaßte Objektfeld (40) etwa die fünffache Kantenlänge der Kodierung (36) aufweist.

5. Verteileranlage nach mindestens einem der Ansprüche 1 bis 4, dadurch gekennzeichnet, daß das Objektfeld (40) in mehrere, parallel zueinander und zur Transportrichtung verlaufende und durch Suchlinien (41, 42, 42', 43, 43') optisch getrennte Suchspalten aufgeteilt ist und daß die beiden äußeren Suchlinien (43, 43') mit Abstand von der Außenkante des Objektfeldes (40) durch Bildung von Rändern (44, 44') vorgesehen sind.

6. Verteileranlage nach Anspruch 5, dadurch gekennzeichnet, daß der seitliche Abstand der Suchlinien (41, 42, 42', 43, 43') etwa 80 Bildpunkte und die Breite der Ränder (44, 44') etwa 96 Bildpunkte beträgt.

7. Verteileranlage nach mindestens einem der Ansprüche 1 bis 6, dadurch gekennzeichnet, daß der Suchvorgang zum Suchen der Kodierung (36) innerhalb des Objektfeldes (40) derart ausgebildet ist, daß auf der mittleren Suchlinie

0115558

(41), vorzugsweise in Sprungschaltung, entgegengesetzt zur Transportrichtung und anschließend abwechselnd in gleicher Richtung auf den rechts und dann den links von der mittleren Suchlinie (41) seitlich daneben liegenden Suchlinien (42, 42', 43, 43') solange Bildpunkte gesetzt werden, bis ein Hell- Dunkel- Übergang erfolgt, nach welchem bis zu ca. zehn hintereinanderliegende Bildpunkte in Suchrichtung (46) und dann bis zu zehn hintereinanderliegende Bildpunkte rechtwinklig nach rechts (47) jeweils bis zu einem Dunkel-Hell-Übergang gesetzt werden.

8. Verteileranlage nach mindestens einem der Ansprüche 1 bis 7, dadurch gekennzeichnet, daß zur Lagebestimmung der Kodierung (36) deren vorderster Eckpunkt und anschliessend deren hinterster Eckpunkt gesucht und durch Feststellung der Mitte zwischen den beiden Eckpunkten der Mittelpunkt der Kodierung (36) ermittelt wird.

9. Verteileranlage nach mindestens den Ansprüche 7 und 8, dadurch gekennzeichnet, daß zur Auswertung der Kodierung (36) eine parallel zu den Suchlinien (41, 42, 42', 43, 43') liegende Schnittlinie durch den Mittelpunkt der Kodierung (36) gelegt wird, die den Maßstab der geschnittenen Kodierung (36) aufweist.

10. Verteileranlage nach mindestens einem der Ansprüche 1 bis 9, dadurch gekennzeichnet, daß die Balkengruppe (39) der Kodierung (36) aus den Klartextzeilen der Anschrift besteht.

0115558

FIG. 1

FIG. 2

FIG. 4

36
37
38
39

FIG. 5

36
39
37 38 38 39

FIG. 6

51 40 50
45 47
48
44' 43' 42' 41 49 42 43 44

FIG. 3

3/3

0115558

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | DE-A-2 338 561 (SCANNER INC.)<br><br>* Figuren 1-7; Seiten 3-7; Seite 10, letzter Absatz - Seite 13, 1. Absatz; Seite 46, letzter Absatz *<br><br>--- | 1-3,5, 10 | G 06 K 7/10<br>B 65 G 47/49 |
| Y | US-A-4 044 227 (HOLM)<br>* Figur 2; Spalte 3, Zeile 39 - Spalte 5, Zeile 28 *<br><br>--- | 1,2 | |
| Y | US-A-3 074 634 (GAMO)<br>* Figur 1; Spalte 2, Zeilen 16-32 *<br><br>--- | 2 | |
| Y | DE-A-2 439 913 (FERRANTI-PACKARD LTD.)<br>* Figuren 1-9; Seiten 3-7; Seiten 21-32 *<br><br>--- | 1-3 | RECHERCHIERTE SACHGEBIETE (Int. Cl. ³) |
| A | IBM TECHNICAL DISCLOSURE BULLETIN, Band 13, Nr. 2, Juli 1970, Seiten 326-327, New York, USA<br>T.W. CURTIS et al.: "Mark-read vertical correction" * Seiten 326,327 *<br><br>--- | 5,7 | G 06 K 7/015<br>G 06 K 7/10<br>G 06 K 19/06 |
| A | DE-A-1 956 430 (IBM)<br>* Figuren 1,2; Seiten 1-8 *<br><br>---              -/- | 5,7 | |

Der vorliegende Recherchenbericht wurde für alle Patentansprüche erstellt.

| Recherchenort<br>DEN HAAG | Abschlußdatum der Recherche<br>03-05-1983 | Prüfer<br>PESCHEL W. |
|---|---|---|

Europäisches
Patentamt

**EUROPÄISCHER RECHERCHENBERICHT**

0115558

Nummer der Anmeldung

EP 83 10 1253

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 550 770 (SVEJSECENTRALEN) ----- | 1 | |

RECHERCHIERTE SACHGEBIETE (Int. Cl. ³)

Der vorliegende Recherchenbericht wurde für alle Patentansprüche erstellt.

| Recherchenort DEN HAAG | Abschlußdatum der Recherche 03-05-1983 | Prüfer PESCHEL W. |
|---|---|---|